# EUROPEAN PATENT APPLICATION

(11) **EP 4 773 494 A1**
(43) Date of publication of application: **08.07.2026**
(21) Application number: 24902125.4
(22) Date of filing: 31.07.2024
(51) Int. Cl.: H02M 1/44

(54) **POWER SUPPLY CIRCUIT, CIRCUIT BOARD, BATTERY MANAGEMENT SYSTEM, AND ELECTRIC DEVICE**

(30) Priority: 13.12.2023 CN 202323398629 U
(71) Applicant: Contemporary Amperex Technology Co., Limited, Ningde, Fujian 352100 (CN)
(72) Inventor: LOU, Qidong, Ningde, Fujian 352100 (CN); CHU, Le, Ningde, Fujian 352100 (CN); FU, Yanhui, Ningde, Fujian 352100 (CN); WU, Guoxiu, Ningde, Fujian 352100 (CN)
(74) Representative: Ran, Handong
(86) International application number: PCT/CN2024/108924
(87) International publication number: WO 2025/123699

(57) **Abstract**

The present application discloses a power supply circuit, a circuit board, a battery management system, and an electric device. The power supply circuit comprises a driver, a transformer, a rectifier, and a filtering module; the driver comprises a driving pin and a power supply input pin; the transformer comprises a primary winding and a secondary winding; the driving pin and the power supply input pin are connected to different taps of the primary winding; the secondary winding is connected to an input end of the rectifier, and an output end of the rectifier is connected to a power supply output end of the power supply circuit; the filtering module comprises at least one of a driving filtering module, an input filtering module, an output filtering module, and a primary and secondary filtering module; the driving filtering module is connected to the driving pin; the input filtering module is connected to the power supply input pin and the primary winding; the output filtering module is connected to the power supply output end; and the primary and secondary filtering module is connected to a grounding end connected to the driver and a grounding end connected to the secondary winding. The embodiments of the present application can improve the EMC performance of the power supply circuit.

## Description

### CROSS-REFERENCE TO RELATED APPLICATIONS

The present application claims priority to Chinese Patent Application No. 202323398629.X, entitled "POWER SUPPLY CIRCUIT, CIRCUIT BOARD, BATTERY MANAGEMENT SYSTEM, AND ELECTRICAL APPARATUS" and filed on December 13, 2023, the entire content of which is incorporated herein by reference.

### TECHNICAL FIELD

The present application relates to the technical field of power supply circuits, and especially relates to a power supply circuit, a circuit board, a battery management system, and an electrical apparatus.

### BACKGROUND

As a hybrid high-voltage and low-voltage controller system, a battery management system (BMS) generally uses isolated power supply circuits in product design as the power supply for high-voltage side functional modules (e.g., high-voltage sampling and insulation sampling).

However, an isolated power supply circuit uses a driver IC with fixed parameters, and the drive parameters cannot be adjusted to improve electromagnetic compatibility (EMC). Therefore, how to improve the EMC performance of a power supply circuit is an important issue faced by those skilled in the art.

### SUMMARY OF THE INVENTION

The present application provides a power supply circuit, a circuit board, a battery management system, and an electrical apparatus, which helps to improve the electromagnetic compatibility (EMC) performance of the power supply circuit.

In a first aspect, the present application provides a power supply circuit, including a driver, a transformer, a rectifier, and a filter module. The driver includes a drive pin and a power supply input pin. The transformer includes a primary winding and a secondary winding. The drive pin and the power supply input pin are connected to different taps of the primary winding. The secondary winding is connected to an input terminal of the rectifier. An output terminal of the rectifier is connected to a power supply output terminal of the power supply circuit. The filter module includes at least one of a drive filter module, an input filter module, an output filter module, and a primary-secondary filter module. The drive filter module is connected to the drive pin. The input filter module is connected to the power supply input pin and the primary winding. The output filter module is connected to the power supply output terminal. The primary-secondary filter module is connected to a receiving terminal connected to the driver and a ground terminal connected to the secondary winding.

In embodiments of the present application, without changing the parameters of the driver, the filter module that includes at least one of the drive filter module, the input filter module, the output filter module, and the primary-secondary filter module is provided, thereby helping to improve the EMC performance of the power supply circuit.

In a possible implementation of the first aspect, the drive pin includes a first drive pin and a second drive pin. The first drive pin, the second drive pin, and the power supply input pin are connected to different taps of the primary winding.

The drive filter module includes a first drive filter module and a second drive filter module. The first drive filter module is connected to the first drive pin. The second drive filter module is connected to the second drive pin.

In the embodiments of the present application, the drive filter modules are provided corresponding to different drive pins, to filter signals from the different drive pins, thereby helping to further improve the EMC performance of the power supply circuit.

In a possible implementation of the first aspect, the input filter module includes a first input filter module, a second input filter module, and a third input filter module.

The first input filter module is connected to a power supply input terminal and the power supply input pin.

The second input filter module is connected to the power supply input pin.

The third input filter module is connected to a tap of the primary winding.

In the embodiments of the present application, the input filter modules are provided corresponding to different input terminals, to filter signals from the different input terminals, thereby helping to further improve the EMC performance of the power supply circuit.

In a possible implementation of the first aspect, the drive filter module, the second input filter module, the third input filter module, and the primary-secondary filter module include the same filter model;
and/or, the first input filter module and the output filter module include the same filter model.

The first input filter module and the output filter module need to pass power supply signal s, and may use the same filter model. The drive filter module, the second input filter module, the third input filter module, and the primary-secondary filter module do not need to pass power supply signal s, and may use the same filter model.

In a possible implementation of the first aspect, the drive filter module, the second input filter module, the third input filter module, and the primary-secondary filter module include a C-type filter model;
and/or, the first input filter module and the output filter module include a π-type filter model.

In a possible implementation of the first aspect, the input filter module includes a first capacitor, a second capacitor, a third capacitor, a fourth capacitor, a fifth capacitor, and a first inductor. The first inductor is connected between the power supply input terminal and the power supply input pin. The first capacitor is connected between the power supply input terminal and the first ground terminal. The second capacitor and the third capacitor are connected in parallel between the power supply input pin and the first ground terminal. The fourth capacitor is connected between the power supply input pin and the first ground terminal. The fifth capacitor is connected between a third tap of the primary winding and the first ground terminal. The power supply input pin is connected to the third tap;
and/or, the drive filter module includes a sixth capacitor and a seventh capacitor. The sixth capacitor is connected between the first drive pin of the driver and the first ground terminal. The seventh capacitor is connected between the second drive pin of the driver and the first ground terminal. The first drive pin is connected to the first tap of the primary winding. The second drive pin is connected to a second tap of the primary winding;
and/or, the primary-secondary filter module includes an eighth capacitor. The eighth capacitor is connected between the first ground terminal and the second ground terminal. A fourth tap and a fifth tap of the secondary winding are connected to the rectifier. A sixth tap of the secondary winding is connected to the second ground terminal;
and/or, the output filter module includes a ninth capacitor, a tenth capacitor, an eleventh capacitor, a twelfth capacitor, and a second inductor. The second inductor is connected between the output terminal of the rectifier and the power supply output terminal of the power supply circuit. The ninth capacitor and the tenth capacitor are connected in parallel between the output terminal of the rectifier and the second ground terminal. The eleventh capacitor and the twelfth capacitor are connected in parallel between the power supply output terminal and the second ground terminal.

Based on the same inventive concept, in a second aspect, the embodiments of the present application further provide a circuit board including the power supply circuit as described in any embodiment in the first aspect.

In a possible implementation of the second aspect, the drive filter module includes a first drive filter module and a second drive filter module. The first drive filter module is connected and adjacent to the first drive pin of the driver. The second drive filter module is connected and adjacent to the second drive pin of the driver.

In a possible implementation of the second aspect, the input filter module includes a first input filter module, a second input filter module, and a third input filter module. The first input filter module is connected to the power supply input terminal and the power supply input pin. The first input filter module is adjacent to the power supply input terminal. The second input filter module is connected and adjacent to the power supply input pin. The third input filter module is connected and adjacent to a tap of the primary winding.

In a possible implementation of the second aspect, the output filter module is located between the rectifier and the power supply output terminal.

In a possible implementation of the second aspect, the primary-secondary filter module is adjacent to the transformer.

In the embodiments of the present application, the filter modules corresponding to the drive pins are arranged close to the drive pins, which helps to ensure the filter effect of the filter modules.

In a possible implementation of the second aspect, the input filter module includes a second input filter module and a third input filter module. The second input filter module is connected to the power supply input pin. The third input filter module is connected to the primary winding.

The driver, the transformer, the drive filter module, the second input filter module, and the third input filter module are located on the same side of the circuit board.

The drive filter module and the second input filter module filter signals from the drive pin of the driver and the power supply input pin respectively. The third input filter module filters signals from the tap of the transformer. The drive pin of the driver, the power supply input pin, and the tap of the transformer are connected. If the drive filter module, the second input filter module, and the driver are not on the same side, the third input filter module and the transformer are not on the same side, and the driver and the transformer are not on the same side, connection vias are required to achieve connection therebetween, resulting in a high impedance. In the embodiments of the present application, the driver, the transformer, the drive filter module, the second input filter module, and the third input filter module are arranged on the same side, which can prevent the impedance of connection vias from affecting the filter effect. A filter loop has low resistance to a noise source, which helps to improve the filter effect.

Based on the same inventive concept, in a third aspect, the embodiments of the present application further provide a battery management system including the power supply circuit as described in any embodiment in the first aspect.

Based on the same inventive concept, in a fourth aspect, the embodiments of the present application further provide an electrical apparatus including the battery management system as described in any embodiment in the third aspect.

The foregoing description is merely an overview of the technical solutions of the present application. In order that the technical means of the present application can be understood more clearly so that the technical means can be implemented according to contents of the specification, and in order that the foregoing and other objectives, features, and advantages of the present application can be understood more clearly, specific implementations of the present application are described below.

### DESCRIPTION OF DRAWINGS

The features, advantages, and technical effects of exemplary embodiments of the present application will be described with reference to the accompanying drawings.
FIG. 1 is a schematic structural diagram of a power supply circuit according to an embodiment of the present application;
FIG. 2 is a schematic structural diagram of a power supply circuit according to another embodiment of the present application;
FIG. 3 is a schematic structural diagram of a power supply circuit according to still another embodiment of the present application;
FIG. 4 is a schematic structural diagram of a power supply circuit according to still another embodiment of the present application;
FIG. 5 is a schematic structural diagram of a power supply circuit according to still another embodiment of the present application; and
FIG. 6 is a schematic structural diagram of a layout of a circuit board according to an embodiment of the present application.

### Reference numerals:

10. Driver;
20. Transformer;
30. Rectifier;
40. Filter module;
41. Drive filter module; 411. First drive filter module; 412. Second drive filter module;
42. Input filter module; 421. First input filter module; 422. Second input filter module; 423. Third input filter module;
43. Output filter module; and
44. Primary-secondary filter module.

### DETAILED DESCRIPTION

For the objects, technical solutions and advantages of the embodiments of the present application to be clearer, the technical solutions in the embodiments of the present application will be clearly and completely described below in conjunction with the drawings in the embodiments of the present application, and it is apparent that the described embodiments are some, rather than all, of the embodiments of the present application. Based on the embodiments in the present application, all other embodiments obtained by ordinary technicians in this field without creative work belong to the protection scope of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. In the specification, claims, and the abovementioned accompanying drawings of the present application, the terms "first", "second", and so on are intended to distinguish between similar objects rather than indicating a specific order.

In the description of the present disclosure, it is to be noted that unless otherwise specified and limited, the terms "arranging", "linking", "connection", and "attaching" are to be broadly understood, for example, the connection can be fixed connection, detachable connection, or integrated connection; and the linking can be mechanical connection; the linking can be direct linking, or indirect linking through an intermediate medium, or internal communication of two components. For those of ordinary skill in the art, the specific meanings of the above terms in the present application may be understood on a case-by-case basis.

Isolated power supplies are generally used in product design of battery management systems (BMSs) as the power supply for high-voltage side functional modules (high-voltage sampling and insulation sampling). The two modules have low power consumption requirements, so low-cost push-pull isolated power supply circuits are widely used in products of the BMS industry.

For example, an SN6501 driver IC may be used in an isolated power supply circuit. However, as a driver IC with an internal integrated drive switch (e.g., MOSFET), the key drive control signal parameters of the SN6501 have been fixed by chip parameters. In terms of EMC design, the MOSFET drive parameters cannot be adjusted to improve the EMC performance and solve the problem of EMC exceeding a standard in application circuits.

In order to solve the above technical problems, the embodiments of the present application provide a power supply circuit, a circuit board, a battery management system, and an electrical apparatus, and the power supply circuit, the circuit board, the battery management system, and the electrical apparatus provided by the embodiments of the present application are introduced in detail below with reference to the accompanying drawings.

The power supply circuit provided by the embodiments of the present application is introduced first below.

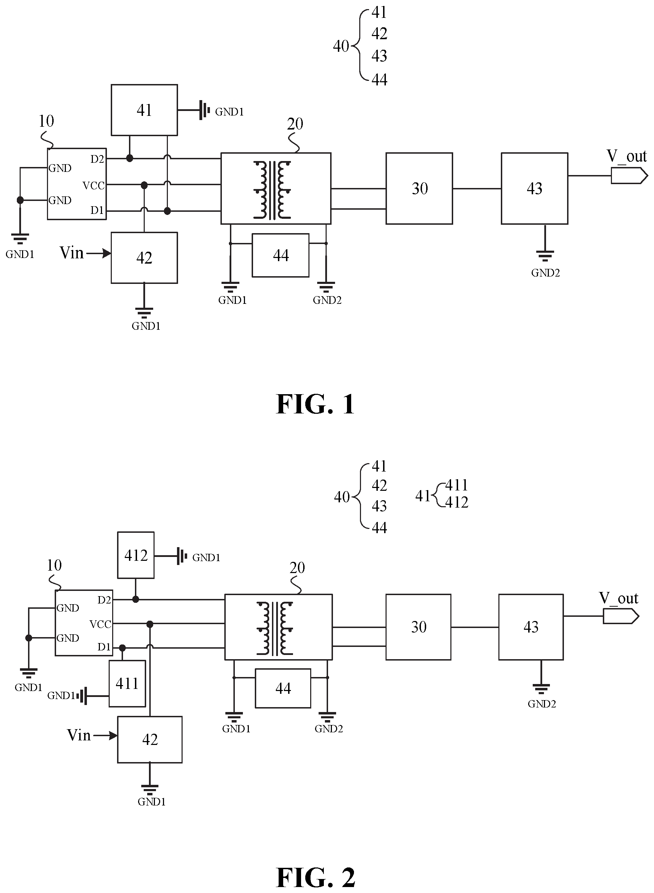

As shown in FIG. 1, the power supply circuit provided by the embodiments of the present application may include a driver 10, a transformer 20, a rectifier 30, and a filter module 40.

The driver 10 includes drive pins D1/D2 and a power supply input pin VCC.

The transformer 20 includes a primary winding and a secondary winding. The primary winding may include a plurality of taps, and the secondary winding may also include a plurality of taps. The drive pins D1/D2 and the power supply input pin VCC are connected to different taps of the primary winding. The secondary winding is connected to an input terminal of the rectifier 30. An output terminal of the rectifier 30 is connected to a power supply output terminal V_out of the power supply circuit.

The filter module 40 may include at least one of a drive filter module 41, an input filter module 42, an output filter module 43, and a primary-secondary filter module 44.

The drive filter module 41 is connected to the drive pin D. The input filter module 42 is connected to the power supply input pin VCC and the primary winding. The output filter module 43 is connected to the power supply output terminal V_out. The primary-secondary filter module 44 is connected to a receiving terminal GND1 connected to the driver 10 and a ground terminal GND2 connected to the secondary winding.

The drive filter module 41 may be used to filter pulse voltage in a switching process of the driver 10, thereby smoothing the waveform of drive signals.

The input filter module 42 may be used to filter interference from input signals. The input filter module 42 may also be used to attenuate interference generated by the power supply from being transmitted to an input power supply side.

The output filter module 43 may be used to filter interference from the power supply output.

The primary-secondary filter module 44 may be used to filter loop noise of the power supply.

In the embodiments of the present application, without changing the parameters of the driver 10, the filter module 40 that includes at least one of the drive filter module 41, the input filter module 42, the output filter module 43, and the primary-secondary filter module 44 is provided, thereby helping to improve the EMC performance of the power supply circuit.

It should be noted that although FIG. 1 shows the drive filter module 41, the input filter module 42, the output filter module 43, and the primary-secondary filter module 44, the power supply circuit in the embodiments of the present application may include one or more of the drive filter module 41, the input filter module 42, the output filter module 43, and the primary-secondary filter module 44.

Exemplarily, the driver 10 includes an SN6501 chip.

In some embodiments, as shown in FIG. 2, the drive pin D includes a first drive pin D1 and a second drive pin D2. The first drive pin D1, the second drive pin D2, and the power supply input pin VCC are connected to different taps of the primary winding. For example, the primary winding includes a first tap 1, a second tap 2, and a third tap 3, and the third tap 3 is a tap between the first tap 1 and the second tap 2. The third tap 3 may be a center tap. The first drive pin D1 is connected to the first tap 1 of the primary winding. The second drive pin D2 is connected to the second tap 2 of the primary winding. The power supply input pin VCC is connected to the third tap 3 of the primary winding.

The drive filter module 41 may include a first drive filter module 411 and a second drive filter module 412. The first drive filter module 411 is connected to the first drive pin D1. The second drive filter module 412 is connected to the second drive pin D2.

The first drive filter module 411 may be used to filter pulse voltage in a switching process of a switch corresponding to the first drive pin D1, and thus may be used to smooth the waveform of drive signals from the first drive pin D1.

The second drive filter module 412 may be used to filter pulse voltage in a switching process of a switch corresponding to the second drive pin D2, and thus may be used to smooth the waveform of drive signals from the second drive pin D2.

In the embodiments of the present application, the drive filter modules are provided corresponding to different drive pins, to filter signals from the different drive pins, thereby helping to further improve the EMC performance of the power supply circuit.

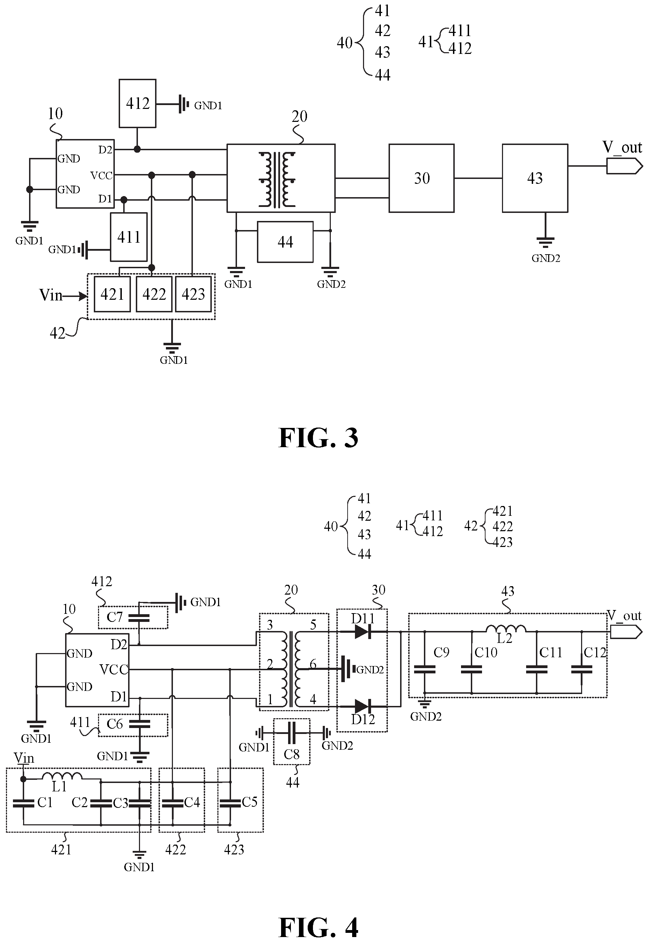

In some embodiments, as shown in FIG. 3, the input filter module 42 may include a first input filter module 421, a second input filter module 422, and a third input filter module 423.

The first input filter module 421 is connected to the power supply input terminal Vin and the power supply input pin Vcc of the driver 10.

The second input filter module 422 is connected to the power supply input pin Vcc of the driver 10.

The third input filter module 423 is connected to a tap of the primary winding. For example, the power supply input pin Vcc of the driver 10 is connected to the third tap 3 of the primary winding. The third input filter module 423 is connected to the third tap 3 of the primary winding.

The first input filter module 421 may be used to filter interference from input signals from the power supply input terminal Vin. The first input filter module 421 may also be used to attenuate interference generated by the power supply from being transmitted to the power supply input pin Vcc.

The second input filter module 422 may be used for decoupling of the power supply input pin Vcc. In other words, the second input filter module 422 may be used to eliminate parasitic coupling of the power supply input pin Vcc in the circuit.

The third input filter module 423 may be used for decoupling of the third tap 3 of the primary winding. In other words, the third input filter module 423 may be used to eliminate parasitic coupling of the third tap 3 of the primary winding in the circuit.

In the embodiments of the present application, the input filter modules are provided corresponding to different input terminals, to filter signals from the different input terminals, thereby helping to further improve the EMC performance of the power supply circuit.

In some embodiments, the drive filter module 41, the second input filter module 422, the third input filter module 423, and the primary-secondary filter module 44 include the same filter model. And/or, the first input filter module 421 and the output filter module 43 include the same filter model.

Exemplarily, the filter model may include a C-type filter model, a π-type filter model, an LC-type filter model, an LR-type filter model, and the like. The π-type filter model may also be called a PI-type filter model.

The C-type filter model is a filter circuit that includes capacitors. The π-type filter model is a filter circuit that includes an inductor, and capacitors are connected to both sides of the inductor. The LC-type filter model is a filter circuit that includes an inductor, and a capacitor is connected to one side of the inductor. The LR-type filter model is a filter circuit that includes an inductor, and a resister is connected to one side of the inductor.

The first input filter module 421 and the output filter module 43 need to pass power supply signal s, and may use the same filter model. The drive filter module 41, the second input filter module 422, the third input filter module 423, and the primary-secondary filter module 44 do not need to pass power supply signal s, and may use the same filter model.

As an example, the dynamic filter module 41, the second input filter module 422, the third input filter module 423, and the primary-secondary filter module 44 may include a C-type filter model; and/or, the first input filter module 421 and the output filter module 43 may include a π-type filter model.

Of course, the filter module may also be other filter models according to requirements. The filter models in the power supply circuit of the present application include but are not limited to C-type filter models and π-type filter models.

In some embodiments, as shown in FIG. 4, the input filter module 42 may include a first capacitor C1, a second capacitor C2, a third capacitor C3, a fourth capacitor C4, a fifth capacitor C5, and a first inductor L1. The first inductor L1 is connected between the power supply input terminal Vin and the power supply input pin VCC. The first capacitor C1 is connected between the power supply input terminal Vin and the first ground terminal GND1. The second capacitor C2 and the third capacitor C3 are connected in parallel between the power supply input pin VCC and the first ground terminal GND1.

The first capacitor C1, the second capacitor C2, the third capacitor C3, and the first inductor L1 form a π-type filter model.

In terms of layout, the first capacitor C1, the second capacitor C2, the third capacitor C3, and the first inductor L1 may be arranged on a power supply input loop of the driver 10, and the first capacitor C1, the second capacitor C2, the third capacitor C3, and the first inductor L1 may be close to the power supply input terminal Vin and the power supply input pin VCC.

The fourth capacitor C4 is connected between the power supply input pin VCC and the first ground terminal GND1. The fifth capacitor C5 is connected between the third tap 3 of the primary winding and the first ground terminal GND1. The power supply input pin VCC is connected to the third tap 3 of the primary winding.

The fourth capacitor C4 serves as a decoupling capacitor for the power supply input pin VCC. In terms of layout, the fourth capacitor C4 may be placed next to the power supply input pin VCC.

The fifth capacitor C5 serves as a decoupling capacitor for the third tap 3 of the primary winding. In terms of layout, the fifth capacitor C5 may be placed next to the third tap 3 of the primary winding.

In some embodiments, as shown in FIG. 4, the drive filter module 41 includes a sixth capacitor C6 and a seventh capacitor C7. The sixth capacitor C6 is connected between the first drive pin D1 of the driver 10 and the first ground terminal GND1. The seventh capacitor C7 is connected between the second drive pin D2 of the driver 10 and the first ground terminal GND1. The first drive pin D1 is connected to the first tap 1 of the primary winding. The second drive pin D2 is connected to a second tap 2 of the primary winding.

The sixth capacitor C6 serves as a filter capacitor for the first drive pin D1. In terms of layout, the sixth capacitor C6 may be placed next to the first drive pin D1.

The seventh capacitor C7 serves as a filter capacitor for the second drive pin D2. In terms of layout, the seventh capacitor C7 may be placed next to the second drive pin D2.

In some embodiments, as shown in FIG. 4, the primary-secondary filter module 44 includes an eighth capacitor C8. The eighth capacitor C8 is connected between the first ground terminal GND1 and the second ground terminal GND2. A fourth tap 4 and a fifth tap 5 of the secondary winding are connected to the rectifier 30. A sixth tap 6 of the secondary winding is connected to the second ground terminal GND2.

In terms of layout, the eighth capacitor C8 may be placed near and across two sides of the transformer 20 to ensure that a loop from the power supply input pin VCC to the first ground terminal GND1 to the second ground terminal GND2 to the power supply output terminal V_out is the shortest.

Exemplarily, the rectifier 30 may include a first diode D11 and a second diode D12. The anode of the first diode D11 is connected to the fourth tap 4 of the secondary winding. The anode of the second diode D12 is connected to the fifth tap 5 of the secondary winding. The cathode of the first diode D11 and the cathode of the second diode D12 are connected to each other as the output terminal of the rectifier 30.

In some embodiments, as shown in FIG. 4, the output filter module 43 includes a ninth capacitor C9, a tenth capacitor C10, an eleventh capacitor C11, a twelfth capacitor C12, and a second inductor L2. The second inductor L2 is connected between the output terminal of the rectifier 30 and the power supply output terminal V_out of the power supply circuit. The ninth capacitor C9 and the tenth capacitor C10 are connected in parallel between the output terminal of the rectifier 30 and the second ground terminal GND2. The eleventh capacitor C11 and the twelfth capacitor C12 are connected in parallel between the power supply output terminal V_out and the second ground terminal GND2.

The ninth capacitor C9, the tenth capacitor C10, the eleventh capacitor C11, the twelfth capacitor C12, and the second inductor L2 form a π-type filter model.

In terms of layout, the ninth capacitor C9, the tenth capacitor C10, the eleventh capacitor C11, the twelfth capacitor C12, and the second inductor L2 are arranged on an output loop of the rectifier 30.

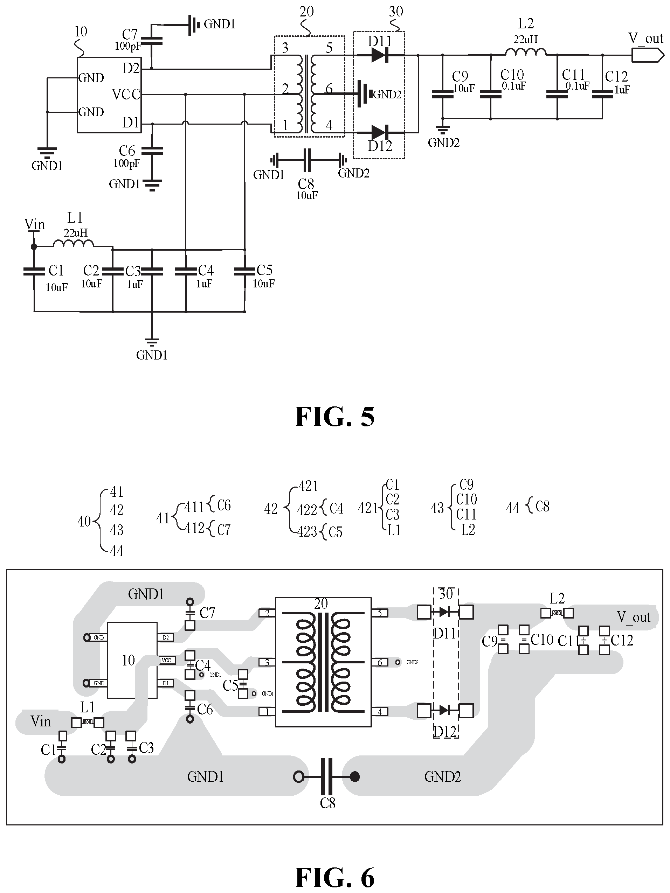

As an example, the parameters of the devices in the power supply circuit may be as shown in FIG. 5. It should be noted that the parameters of the devices in the embodiments of the present application may include but are not limited to the parameters as shown in FIG. 5.

The inventor also tested the EMC performance of a BMS provided with the power supply circuit in the embodiments of the present application, and found that the BMS passed the CISPR25 standard Class 5 in an EMC conducted emission (current method) test.

Based on the same inventive concept, the present application further provides a circuit board. The circuit board includes the power supply circuit in any one of the above embodiments. It can be understood that the circuit board has the beneficial effects of the power supply circuit provided by the embodiments of the present application, for which a reference may be made to the specific descriptions of the power supply circuit in the above embodiments, and descriptions thereof are omitted in this embodiment.

In some embodiments, as shown in FIG. 6, the drive filter module 41 includes a first drive filter module 411 and a second drive filter module 412. The first drive filter module 411 is connected to the first drive pin D1 of the driver 10, and the first drive filter module 411 is arranged adjacent to the first drive pin D1 of the driver 10. The second drive filter module 412 is connected to the second drive pin D2 of the driver 10, and the second drive filter module 412 is arranged adjacent to the second drive pin D2 of the driver 10.

In the embodiments of the present application, the filter modules corresponding to the drive pins are arranged close to the drive pins, which helps to ensure the filter effect of the filter modules.

The first drive filter module 411 includes a sixth capacitor C6, and the second drive filter module 412 includes a seventh capacitor C7.

In some embodiments, as shown in FIG. 6, the input filter module 42 includes a first input filter module 421, a second input filter module 422, and a third input filter module 423. The first input filter module 421 is connected to the power supply input terminal Vin and the power supply input pin VCC, and the first input filter module 421 is adjacent to the power supply input terminal Vin. The first input filter module 421 may also be close to the power supply input pin VCC. Exemplarily, the first input filter module 421 is on one side of the driver 10. The second input filter module 422 is connected to the power supply input pin VCC, and the second input filter module 422 is adjacent to the power supply input pin VCC. In other words, the second input filter module 422 is arranged next to the power supply input pin VCC. The third input filter module 423 is connected to the third tap 3 of the primary winding, and the third input filter module 423 is adjacent to the third tap 3 of the primary winding. In other words, the third input filter module 423 is arranged next to the third tap 3 of the primary winding.

The first input filter module 421 includes a first capacitor C1, a second capacitor C2, a third capacitor C3, and a first inductor L1. The second input filter module 422 includes a fourth capacitor C4. The third input filter module 423 includes a fifth capacitor C5.

In some embodiments, as shown in FIG. 6, the output filter module 43 is located between the rectifier 30 and the power supply output terminal V_out. The output filter module 43 is on the output loop of the rectifier 30. The output filter module 43 is arranged close to the rectifier 30 and the power supply output terminal V_out.

The output filter module 43 includes a ninth capacitor C9, a tenth capacitor C10, an eleventh capacitor C11, a twelfth capacitor C12, and a second inductor L2.

In some embodiments, as shown in FIG. 6, the primary-secondary filter module 44 is adjacent to the transformer 20.

The primary-secondary filter module 44 includes an eighth capacitor C8. The eighth capacitor C8 may be placed near and across two sides of the transformer 20 to ensure that a loop from the power supply input pin VCC to the first ground terminal GND1 to the second ground terminal GND2 to the power supply output terminal V_out is the shortest.

In the above embodiments, the filter modules are arranged near the pins or devices connected thereto respectively, which helps to improve the filter effect.

It should be noted that in the above embodiments, at least one of the plurality of filter modules may be selected to be arranged near the pin or device connected thereto, or each of the plurality of filter modules may be selected to be arranged near the pin or device connected thereto.

It should be noted that in FIG. 6, an unmarked thick solid line (gray trace) represents a connection trace. A thick solid line (gray trace) marked as GND1 represents the first ground terminal GND1 or connection to the first ground terminal GND1. A thick solid line (gray trace) marked as GND2 represents the second ground terminal GND2 or connection to the second ground terminal GND2. A thick solid line (gray trace) marked as Vin represents the power supply input terminal Vin or connection to the power supply input terminal Vin. A thick solid line (gray trace) marked as V_out represents the power supply output terminal V_out or connection to the power supply output terminal V_out. In addition, a hollow circle indicates connection to the first ground terminal GND1, a solid black dot indicates connection to the second ground terminal GND2, and a hollow square indicates connection to the connection trace.

In some embodiments, the input filter module 42 includes a second input filter module 422 and a third input filter module 423. The second input filter module 422 is connected to the power supply input pin VCC. The third input filter module 423 is connected to the third tap 3 of the primary winding.

The driver 10, the transformer 20, the drive filter module 41, the second input filter module 422, and the third input filter module 423 are located on the same side of the circuit board.

For example, in a thickness direction of the circuit board, the circuit board may include an upper surface and a lower surface opposite to each other. The driver 10, the transformer 20, the drive filter module 41, the second input filter module 422, and the third input filter module 423 are located on the upper surface of the circuit board. Or, the driver 10, the transformer 20, the drive filter module 41, the second input filter module 422, and the third input filter module 423 are located on the lower surface of the circuit board.

The drive filter module 41 and the second input filter module 422 filter signals from the drive pin of the driver 10 and the power supply input pin respectively. The third input filter module 423 filters signals from the tap of the transformer 20. The drive pin of the driver 10, the power supply input pin, and the tap of the transformer 20 are connected. If the drive filter module 41, the second input filter module 422, and the driver 10 are not on the same side, the third input filter module 423 and the transformer 20 are not on the same side, and the driver 10 and the transformer 20 are not on the same side, connection vias are required to achieve connection therebetween, resulting in a high impedance. In the embodiments of the present application, the driver 10, the transformer 20, the drive filter module 41, the second input filter module 422, and the third input filter module 423 are arranged on the same side, which can prevent the impedance of connection vias from affecting the filter effect. A filter loop has low resistance to a noise source, which helps to improve the filter effect.

Other modules may be arranged on either the upper surface or the lower surface of the circuit board, which is not limited in the present application.

Exemplarily, in the thickness direction of the circuit board, the circuit board may include a plurality of film layers stacked together, wherein the first ground terminal GND1 may be located in one of the film layers, and the second ground terminal GND2 may be located in another film layer. Some film layers may also be used to arrange the connection trace which is used to connect the devices in the power supply circuit. Connection vias may also be formed in the film layers, and the connection vias are used to achieve connection between the devices and the ground terminals, or the connection vias are used to achieve connection between the connection trace and the devices.

Based on the same inventive concept, the embodiments of the present application further provide a battery management system including the power supply circuit as described in any one of the above embodiments. It can be understood that the battery management system has the beneficial effects of the power supply circuit provided by the embodiments of the present application, for which a reference may be made to the specific descriptions of the power supply circuit in the above embodiments, and descriptions thereof are omitted in this embodiment.

Based on the same inventive concept, the present application further provides an electrical apparatus. The electrical apparatus includes a battery management system, and the battery management system includes the power supply circuit in any one of the above embodiments. It can be understood that the electrical apparatus has the beneficial effects of the power supply circuit provided by the embodiments of the present application, for which a reference may be made to the specific descriptions of the power supply circuit in the above embodiments, and descriptions thereof are omitted in this embodiment.

It should be noted that in the embodiments as shown in the above FIGS., the manifestation of a capacitor is a single capacitor. In other embodiments, a capacitor may also be an integration of series, parallel, or hybrid capacitors. The specific parameters of the devices may be set according to actual requirements, which is not limited in the present application.

It should be noted that, without conflict, the embodiments in the present application and the features in the embodiments may be combined with each other.

Those of ordinary skill in the art will appreciate that the embodiments described herein are intended to help readers understand the principles of the present application, and it should be understood that the scope of protection of the present application is not limited to such specific statements and embodiments. Those of ordinary skill in the art can make various other specific variations and combinations based on the technical teachings disclosed in the present application without departing from the essence of the present application, and these variations and combinations are still within the scope of protection of the present application.

Although the present application has been described with reference to the exemplary embodiments, without departing from the scope of the present application, various improvements may be made to the present application and parts therein may be replaced with equivalents. In particular, the technical features mentioned in the embodiments may be combined in any way, as long as there is no structural conflict. The present application is not limited to the specific embodiments disclosed herein, but includes all technical solutions falling within the scope of the claims.

## Claims

1. A power supply circuit, comprising a driver, a transformer, a rectifier, and a filter module, wherein:
the driver comprises a drive pin and a power supply input pin, and the transformer comprises a primary winding and a secondary winding, wherein:
the drive pin and the power supply input pin are connected to different taps of the primary winding;
the secondary winding is connected to an input terminal of the rectifier; and
an output terminal of the rectifier is connected to a power supply output terminal of the power supply circuit; and
the filter module comprises at least one of a drive filter module, an input filter module, an output filter module, and a primary-secondary filter module, wherein:
the drive filter module is connected to the drive pin;
the input filter module is connected to the power supply input pin and the primary winding;
the output filter module is connected to the power supply output terminal; and
the primary-secondary filter module is connected to a receiving terminal connected to the driver and a ground terminal connected to the secondary winding.

2. The power supply circuit according to claim 1, wherein:
the drive pin comprises a first drive pin and a second drive pin, wherein the first drive pin, the second drive pin, and the power supply input pin are connected to different taps of the primary winding; and
the drive filter module comprises a first drive filter module and a second drive filter module, wherein the first drive filter module is connected to the first drive pin, and the second drive filter module is connected to the second drive pin.

3. The power supply circuit according to claim 1 or 2, wherein the input filter module comprises a first input filter module, a second input filter module, and a third input filter module, wherein:
the first input filter module is connected to a power supply input terminal and the power supply input pin;
the second input filter module is connected to the power supply input pin; and
the third input filter module is connected to a tap of the primary winding.

4. The power supply circuit according to claim 3, wherein the drive filter module, the second input filter module, the third input filter module, and the primary-secondary filter module comprise the same filter model.

5. The power supply circuit according to claim 3, wherein the first input filter module and the output filter module comprise the same filter model.

6. The power supply circuit according to claim 4, wherein the drive filter module, the second input filter module, the third input filter module, and the primary-secondary filter module comprise a C-type filter model.

7. The power supply circuit according to claim 5, wherein the first input filter module and the output filter module comprise a π-type filter model.

8. The power supply circuit according to claim 1, wherein the input filter module comprises a first capacitor, a second capacitor, a third capacitor, a fourth capacitor, a fifth capacitor, and a first inductor, wherein:
the first inductor is connected between the power supply input terminal and the power supply input pin;
the first capacitor is connected between the power supply input terminal and the first ground terminal;
the second capacitor and the third capacitor are connected in parallel between the power supply input pin and the first ground terminal;
the fourth capacitor is connected between the power supply input pin and the first ground terminal;
the fifth capacitor is connected between a third tap of the primary winding and the first ground terminal; and
the power supply input pin is connected to the third tap.

9. The power supply circuit according to claim 1, wherein the drive filter module comprises a sixth capacitor and a seventh capacitor, wherein:
the sixth capacitor is connected between the first drive pin of the driver and the first ground terminal;
the seventh capacitor is connected between the second drive pin of the driver and the first ground terminal;
the first drive pin is connected to the first tap of the primary winding; and
the second drive pin is connected to a second tap of the primary winding.

10. The power supply circuit according to claim 1, wherein the primary-secondary filter module comprises an eighth capacitor, wherein:
the eighth capacitor is connected between the first ground terminal and the second ground terminal;
a fourth tap and a fifth tap of the secondary winding are connected to the rectifier; and
a sixth tap of the secondary winding is connected to the second ground terminal.

11. The power supply circuit according to claim 1, wherein the output filter module comprises a ninth capacitor, a tenth capacitor, an eleventh capacitor, a twelfth capacitor, and a second inductor, wherein:
the second inductor is connected between the output terminal of the rectifier and the power supply output terminal of the power supply circuit;
the ninth capacitor and the tenth capacitor are connected in parallel between the output terminal of the rectifier and the second ground terminal; and
the eleventh capacitor and the twelfth capacitor are connected in parallel between the power supply output terminal and the second ground terminal.

12. A circuit board, comprising the power supply circuit according to any one of claims 1 to 11.

13. The circuit board according to claim 12, wherein the drive filter module comprises a first drive filter module and a second drive filter module, wherein the first drive filter module is connected and adjacent to the first drive pin of the driver, and the second drive filter module is connected and adjacent to the second drive pin of the driver.

14. The circuit board according to claim 12, wherein the input filter module comprises a first input filter module, a second input filter module, and a third input filter module, wherein:
the first input filter module is connected to the power supply input terminal and the power supply input pin and is adjacent to the power supply input terminal;
the second input filter module is connected and adjacent to the power supply input pin; and
the third input filter module is connected and adjacent to a tap of the primary winding.

15. The circuit board according to claim 12, wherein the output filter module is located between the rectifier and the power supply output terminal.

16. The circuit board according to claim 12, wherein the primary-secondary filter module is adjacent to the transformer.

17. The circuit board according to claim 12, wherein:
the input filter module comprises a second input filter module and a third input filter module, wherein the second input filter module is connected to the power supply input pin, and the third input filter module is connected to the primary winding; and
the driver, the transformer, the drive filter module, the second input filter module, and third input filter module are located on the same side of the circuit board.

18. A battery management system, comprising the power supply circuit according to any one of claims 1 to 11.

19. An electrical apparatus, comprising the battery management system according to claim 18.
